Europäisches Patentamt

European Patent Office

Office européen des brevets

(19)

(11) **EP 1 119 939 B1**

(12) **FASCICULE DE BREVET EUROPEEN**

(45) Date de publication et mention
de la délivrance du brevet:
**30.11.2005 Bulletin 2005/48**

(21) Numéro de dépôt: **99942957.4**

(22) Date de dépôt: **13.09.1999**

(51) Int Cl.$^7$: **H04L 9/06**

(86) Numéro de dépôt international:
**PCT/FR1999/002172**

(87) Numéro de publication internationale:
**WO 2000/024155 (27.04.2000 Gazette 2000/17)**

(54) **PROCEDE DE CONTRE-MESURE DANS UN COMPOSANT ELECTRONIQUE METTANT EN OEUVRE UN ALGORITHME DE CRYPTOGRAPHIE A CLE SECRETE**

**GEGENMASSNAHMENVORRICHTUNG IN EINEM ELKTRONISCHEN BAUTEIL UM EINEN KRYPTO-ALGORITHMUS MIT GEHEIMSCHLÜSSEL DURCH ZU FÜHREN**

**COUNTERMEASURE METHOD IN AN ELECTRONIC COMPONENT USING A SECRET KEY CRYPTOGRAPHIC ALGORITHM**

(84) Etats contractants désignés:
**DE ES FR GB IT**

(30) Priorité: **16.10.1998 FR 9812989**

(43) Date de publication de la demande:
**01.08.2001 Bulletin 2001/31**

(73) Titulaire: **GEMPLUS**
**13881 Gémenos Cedex (FR)**

(72) Inventeurs:
• **CLAVIER, Christophe**
**F-13420 Gémenos (FR)**
• **BENOIT, Olivier**
**F-13400 Aubagne (FR)**

(56) Documents cités:
**FR-A- 2 672 402**

• YI X ET AL: "A METHOD FOR OBTAINING CRYPTOGRAPHICALLY STRONG 8X8 S-BOXES" IEEE GLOBAL TELECOMMUNICATIONS CONFERENCE, PHOENIX, ARIZONA, NOV. 3 - 8, 1997, vol. 2, 3 novembre 1997 (1997-11-03), pages 689-693, XP000737626 INSTITUTE OF ELECTRICAL AND ELECTRONICS ENGINEERS
• MIYAGUCHI S: "SECRET KEY CIPHERS THAT CHANGE THE ENCIPHERMENT ALGORITHM UNDER THECONTROL OF THE KEY" NTT REVIEW, vol. 6, no. 4, 1 juillet 1994 (1994-07-01), pages 85-90, XP000460342

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un procédé de contre-mesure dans un composant électronique mettant en oeuvre un algorithme de cryptographie à clé secrète. Ils sont utilisés dans des applications où l'accès à des services ou à des données est sévèrement contrôlé. Ils ont une architecture formée autour d'un microprocesseur et de mémoires, dont une mémoire programme qui contient la clé secrète.

Ces composants sont notamment utilisés dans les cartes à puce, pour certaines applications de celles-ci. Ce sont par exemple des applications d'accès à certaines banques de données, des applications bancaires, des applications de télépéage, par exemple pour la télévision, la distribution d'essence ou encore le passage de péages d'autoroutes.

Ces composants ou ces cartes mettent donc en oeuvre un algorithme de cryptographie à clé secrète, dont le plus connu est l'algorithme DES (pour *DATA Encryption Standard* dans la littérature anglo-saxonne). D'autres algorithmes à clé secrète existent, comme l'algorithme RC5 ou encore l'algorithme COMP128. Cette liste n'est bien sûr pas exhaustive.

De manière générale et succincte, ces algorithmes ont pour fonction de calculer un message chiffré à partir d'un message appliqué en entrée (à la carte) par un système hôte (serveur, distributeur bancaire ...) et de la clé secrète contenue dans la carte, et de fournir en retour au système hôte ce message chiffré, ce qui permet par exemple au système hôte d'authentifier le composant ou la carte, d'échanger des données ...

Or il est apparu que ces composants ou ces cartes sont vulnérables à des attaques consistant en une analyse différentielle de consommation en courant et qui permettent à des tiers mal intentionnés de trouver la clé secrète. Ces attaques sont appelées attaques DPA, acronyme anglo-saxon pour *Differential Power Analysis.*

Le principe de ces attaques DPA repose sur le rait que la consommation en courant du microprocesseur exécutant des instructions varie selon la donnée manipulée.

Notamment, une instruction du microprocesseur manipulant un bit de donnée génère deux profils de courant différents selon que ce bit vaut «1» ou «0». Typiquement, si l'instruction manipule un «0», on a à cet instant d'exécution une première amplitude du courant consommé et si l'instruction manipule un «1», on a une deuxième amplitude du courant consommé, différente de la première.

Les caractéristiques des algorithmes de cryptographie sont connues : calculs effectués, paramètre utilisés. La seule inconnue est la clé secrète contenue en mémoire programme. Celle-ci ne peut être déduite de la seule connaissance du message appliqué en entrée et du message chiffré fourni en retour.

Cependant, dans un algorithme de cryptographie, certaines données calculées dépendent seulement du message appliqué en claire en entrée de la carte et la clé secrète contenue dans la carte. D'autres données calculées dans l'algorithme peuvent aussi être recalculées seulement à partir du message chiffré (généralement fourni en en clair en sortie de la carte vers le système hôte) et de la clé secrète contenue dans la carte. Plus précisément, chaque bit de ces données particulières peut être déterminé à partir du message d'entrée ou de sortie, et d'un nombre limité de bits particuliers de la clé.

Ainsi, à chaque bit d'une donnée particulière, correspond une sous-clé formée par un groupe particulier de bits de la clé.

Les bits de ces données particulières qui peuvent être prédites sont appelés dans la suite, bits cibles.

L'idée de base de l'attaque DPA est ainsi d'utiliser la différence du profil de consommation en courant d'une instruction selon qu'elle manipule un «1» ou un «0» et la possibilité de calculer un bit cible par les instructions de l'algorithme à partir d'un message connu d'entrée ou de sortie et d'une hypothèse sur la sous-clé correspondante.

Le principe de l'attaque DPA est donc de tester une hypothèse de sous-clé donnée, en appliquant sur un grand nombre de courbes de mesure en courant, chaque relative à un message d'entrée connu de l'attaquant, une fonction booléenne de sélection, fonction de l'hypothèse de sous-clé, et définie pour chaque courbe par la valeur prédite pour un bit cible.

En faisant une hypothèse sur la sous-clé concernée, on est en effet capable de prédire la valeur «0» ou «1» que va prendre ce bit cible pour un message d'entrée ou de sortie donné.

On peut alors appliquer comme fonction booléenne de sélection, la valeur prédite «0» ou «1» par le bit cible pour l'hypothèse de sous-clé considérée, pour trier ces courbes en deux paquets : un premier paquet regroupe les courbes qui ont vu la manipulation du bit cible à «0» et un deuxième paquet regroupe les courbes qui ont vu la manipulation du bit cible à «1» selon l'hypothèse de sous-clé. En faisant la moyenne de consommation en courant dans chaque paquet, on obtient une courbe de consommation moyenne $M0(t)$ pour le premier paquet et une courbe de consommation moyenne $M1(t)$ pour le deuxième paquet.

Si l'hypothèse de sous-clé est juste, le premier paquet regroupe réellement toutes les courbes parmi les N courbes qui ont vu la manipulation du bit cible à «0» et le deuxième paquet regroupe réellement toutes les courbes parmi les N courbes qui ont vu la manipulation du bit cible à «1». La courbe moyenne de consommation $M0(t)$ du premier paquet aura alors une consommation moyenne partout sauf aux moments de l'exécution des instructions critiques, avec un profil de consommation en courant caractéristique de la manipulation du bit cible à «0» ($profil_0$) . En d'autres termes, pour toutes ces courbes tous les bits manipulés ont eu autant de chances de valoir «0» que de valoir «1», sauf le bit cible qui a toujours eu la valeur «0». Ce qui peut s'écrire :

$$M0(t)=[(profil_0 + profil_1)/2]_{t \neq tci} + [profil_0]_{tci}$$

soit

$$M0(t) =[Vm_t]_{t \neq tci} + [profil_0]_{tci}$$

où tci représente les instants critiques, auxquels une instruction critique a été exécutée.

De même, la courbe moyenne de consommation M1(t) du deuxième paquet correspond à une consommation moyenne partout sauf aux moments de l'exécution des instructions critiques, avec un profil de consommation en courant caractéristique de la manipulation du bit cible à «1» ($profil_1$). On peut écrire :

$$M0(t)=[(profil_0 + profil_1)/2]_{t \neq tci} + [profil_1]_{tci}$$

soit

$$M1(t)=[Vm_t]_{t \neq tci} + [profil_1]_{tci}$$

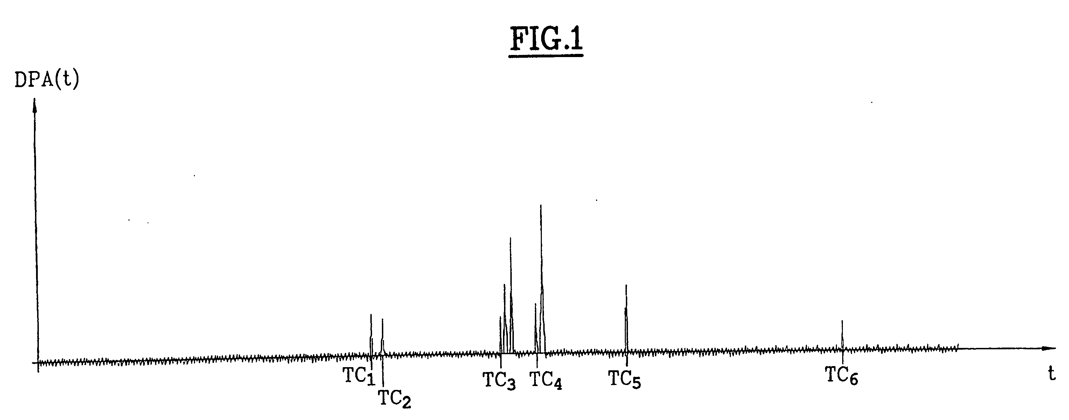

On a vu que les deux profils $profil_0$ et $profil_1$ ne sont pas égaux. La différence des courbes M0(t) et M1(t) donne alors un signal DPA(t) dont l'amplitude est égale à $profil_0$-$profil_1$ aux instants critiques tci d'exécution des instructions critiques manipulant ce bit, c'est à dire, dans l'exemple représenté sur la figure 1, aux endroits tc0 et tc6, et dont l'amplitude est à peu près égale à zéro en dehors des instants critiques.

Si l'hypothèse de sous-clé est fausse, le tri ne correspond pas à la réalité. Statistiquement, il y a alors dans chaque paquet, autant de courbes ayant vu réellement la manipulation du bit cible «0» que de courbes ayant vu la manipulation du bit cible «1». La courbe moyenne résultante M0(t) se situe alors autour d'une valeur moyenne donnée par ($profil_0$+$profil_1$)/2=Vm, car pour chacune des courbes, tous les bits manipulés, y compris le bit cible ont autant de chances de valoir «0» que de valoir «1».

Le même raisonnement sur le deuxième paquet conduit à une courbe moyenne de consommation en courant M1(t) dont l'amplitude se situe autour d'une valeur moyenne donnée par ($profil_0$+$profil_1$)/2=Vm.

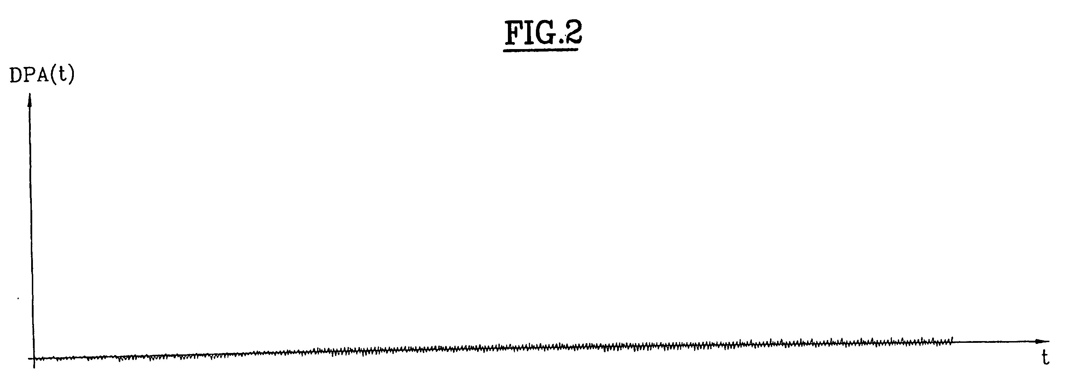

Le signal DPA(t) fourni par la différence M0(t) -M1(t) est dans ce cas sensiblement égale à zéro. Le signal DPA(t) dans le cas d'une hypothèse de sous-clé fausse est représenté sur la figure 2.

Ainsi l'attaque DPA exploite la différence du profil de consommation en courant pendant l'exécution d'une instruction suivant la valeur du bit manipulé, pour effectuer un tri de courbes de consommation en courant selon une fonction de sélection booléenne pour une hypothèse de sous-clé donnée. En effectuant une analyse différentielle de la consommation moyenne en courant entre les deux paquets de courbes obtenus, on obtient un signal d'information DPA(t).

Le déroulement d'une attaque DPA consiste alors globalement :

a- à tirer N messages aléatoires (par exemple N égal 1000) ;
b- à faire exécuter l'algorithme par la carte pour chacun des N messages aléatoires, en relevant la courbe de consommation en courant à chaque fois (mesurée sur la borne d'alimentation du composant) ;
c- à faire une hypothèse sur une sous-clé ;
d- à prédire, pour chacun des messages aléatoires, la valeur prise par un des bits cibles dont la valeur ne dépend que des bits du message (d'entrée ou de sortie) et de la sous-clé prise en hypothèse, pour obtenir la fonction de sélection booléenne ;
e- à trier les courbes selon cette fonction de sélection booléenne (c'est à dire selon la valeur «0» ou «1» prédite pour ce bit cible pour chaque courbe sous l'hypothèse de sous-clé) ;
f- à calculer dans chaque paquet la courbe résultante de consommation moyenne en courant ;
g- à effectuer la différence de ces courbes moyennes, pour obtenir le signal DPA(t).

Si l'hypothèse sur la sous-clé est juste, la fonction de sélection booléenne est juste et les courbes du premier paquet correspondent réellement aux courbes pour lesquelles le message appliqué en entrée ou en sortie à donner un bit cible à «0» dans la carte et les courbes du deuxième paquet correspondent réellement aux courbes pour lesquelles le message appliqué en entrée ou en sortie a donné un bit cible à «1» dans la carte.

On est dans le cas de la figure 1 : le signal DPA (t) n'est donc pas nul aux instants tc0 à tc6 correspondant à l'exécution des instructions critiques (celles qui manipulent le bit cible).

On notera que l'attaquant n'a pas besoin de connaître avec précision les instants critiques. Il suffit qu'il y ait au moins un instant critique dans la période d'acquisition.

Si l'hypothèse de sous-clé n'est pas juste, le tri ne correspond pas à la réalité et on a alors dans chaque paquet autant de courbes correspondant en réalité à un bit cible à «0» que de courbes correspondant à un bit cible à «1». Le signal DPA(t) est sensiblement nul partout (cas représenté à la figure 2). Il faut retourner à l'étape c- et faire une nouvelle hypothèse sur la sous-clé.

Si l'hypothèse s'avère juste, on peut passer à l'évaluation d'autres sous-clés, jusqu'à avoir reconstitué la clé au maximum. Par exemple, avec un algorithme DES, on utilise une clé de 64 bits, dont seulement 56 bits utiles. Avec une attaque DPA, on est capable de reconstituer au moins 48 bits des 56 bits utiles.

Trois documents se rapprochant de l'invention peuvent être cités.

Le premier document de Yi X. dont le titre anglais est «*A method for obtaining cryptographically strong 8X8 S-BOXES*», document publié à la conférence sur les télécommunications à Phoenix, Arizona, Etats-Unis d'Amérique, du 3 au 8 novembre 1997, décrit une méthode pour développer facilement et efficacement par ordinateur des boites-S (boites de substitution) fortes. L'algorithme DES pourrait être cassé si des boites-S pauvres étaient utilisées. Les boites inverses sont également fortes. La méthode de ce document décrit une bonne propriété contre l'attaque différentielle permettant par l'utilisation de tables de constantes SBOX d'accroître la sécurité des systèmes cryptographiques.

Le second document de Miyaguchi S. dont le titre anglais est «*Secret key ciphers that change the encipherment algorithm under the control* of *the key*», document publié dans la revue « NTT REVIEW », vol. 6, n° 4, du 1er juillet 1994, décrit un algorithme principal secret de chiffrement qui change dynamiquement sous la commande de la clé de chiffrement, par substitutions/ permutation entre les tables de constantes élémentaires S1 à S8 d'une table de constantes S-BOX. La méthode est résistante contre les attaques qui calculent la clé en utilisant des paires de texte en clair et leur bloc de texte chiffré. Il contient un exemple avec un chiffre modifié de DES.

Le troisième document, le FR 2 672 402, publié le 7 août 1992, décrit un procédé et dispositif de génération de nombres pseudo-aléatoires uniques utilisant un programme de cryptage du type DES s'appliquant à la réalisation de cartes à puce.

La présente invention a pour but de mettre en oeuvre dans un composant électronique, un procédé de contre-mesure qui entraîne un signal DPA(t) nul, même dans le cas où l'hypothèse de sous-clé est juste.

De cette façon, rien ne permet de distinguer le cas de l'hypothèse de sous-clé juste des cas d'hypothèses de sous clés fausses. Par cette contre-mesure, le composant électronique est paré contre les attaques DPA.

Selon l'invention, le procédé de contre-mesure permet de rendre imprédictibles les bits cibles, c'est à dire les données manipulées par des instructions critiques.

En effet, du fait de la contre-mesure, pour chaque message appliqué en entrée, un bit cible manipulé par une instruction critique prend la valeur 0 ou 1 avec une égale probabilité. Dans chaque paquet de courbes que fera l'attaquant sous une hypothèse de sous-clé donnée, au moyen de la fonction de sélection booléenne qu'il aura calculée, on aura autant de courbes ayant réellement manipulé un bit cible «0» que de courbes ayant réellement manipulé un bit cible à «1». Le signal DPA(t) sera toujours nul, que l'hypothèse de sous-clé soit juste ou non.

Telle que caractérisée, l'invention concerne donc un procédé de contre-mesure contre des attaques par analyse différentielle de consommation en courant dans un composant électronique comprenant un microprocesseur, une mémoire programme et une mémoire de travail permettant la mise en oeuvre d'un algorithme cryptographique à clé secrète (K) du type DES comprenant seize tours de calcul (T1, ...,T16), chacun des tours comprenant de nombreuses et différentes étapes de calcul, la mise en oeuvre de l'algorithme comprenant l'utilisation de premiers moyens ($TC_0$) de traitement numérique pour fournir une donnée de sortie (S) à partir d'une donnée d'entrée (E), ladite donnée de sortie et/ou des données dérivées étant manipulées par des instructions dudit algorithme, qui sont critiques au sens des dites attaques, procédé qui est caractérisé en ce qu'il prévoit l'utilisation d'autres moyens ($TC_1$) de traitement numérique, fixés avec les premiers moyens en mémoire programme du dit composant, de façon alternative avec lesdits premiers moyens, lesdits autres moyens étant obtenus desdits premiers moyens par complémentation de la donnée d'entrée et/ou de la donnée de sortie, en sorte que la donnée de sortie et lesdites données dérivées soient imprédictibles et en ce que les premiers moyens ($TC_0$) et les autres moyens ($TC_1$) sont des tables de constantes et leur utilisation ($TC_0$, $TC_1$) est gérée par une loi statistique de probabilité un demi.

D'autres caractéristiques et avantages de l'invention sont détaillés dans la description suivante faite à titre indicatif et nullement limitatif et en référence aux dessins annexés, dans lesquels :

- les figures 1 et 2 déjà décrites représentent le signal DPA(t) que l'on peut obtenir en fonction d'une hypothèse sur une sous-clé de la clé secrète K, selon une attaque DPA;
- les figures 3 et 4 sont des organigrammes d'exécution des premiers tours et derniers tours de l'algorithme DES;
- la figure 5 est un schéma-bloc de l'opération SBOX utilisée dans l'algorithme DES;
- la figure 6 montre un exemple de table de constantes élémentaires à une entrée et une sortie utilisée dans l'opération SBOX;
- les figures 7 et 8 montrent un exemple d'organigramme d'exécution des premiers et derniers tours de l'algorithme DES, selon un mode de réalisation du procédé de contre-mesure selon l'invention;
- les figures 9 et 10 montrent respectivement une deuxième et une troisième table de constantes élémentaires selon l'invention;
- la figure 11 représente un organigramme général d'exécution du DES selon un mode de réalisation du procédé de contre-mesure selon l'invention; et
- la figure 12 représente un schéma-bloc simplifié d'une carte à puce comportant un composant électronique dans lequel le procédé de contre-mesure selon l'invention est mis en oeuvre.

La présente invention va être expliquée dans un exemple d'application à l'algorithme cryptographique DES. L'invention n'est pas limitée à ce seul exemple. Elle s'applique aux algorithmes cryptographiques à clé secrète en général.

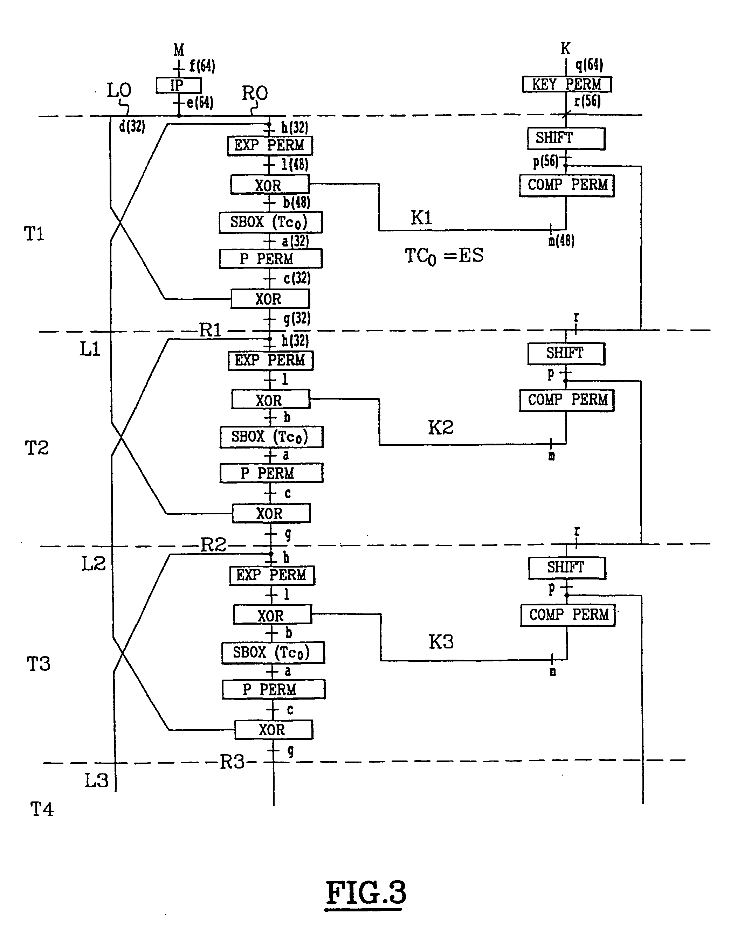

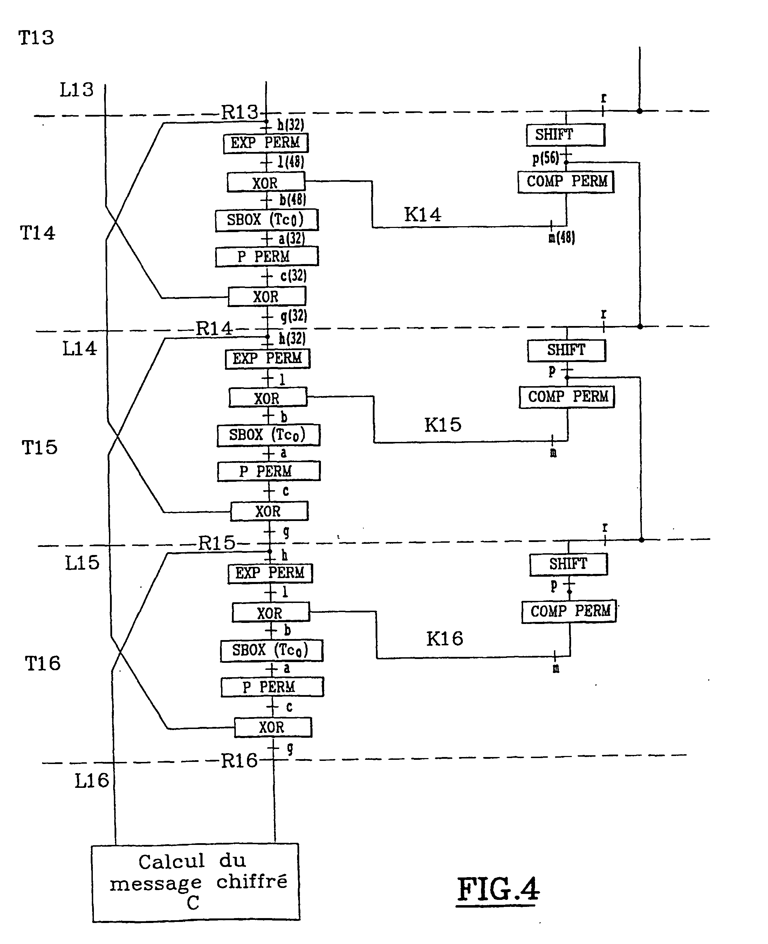

L'algorithme cryptographique DES (dans la suite on parlera plus simplement du DES ou de l'algorithme DES) comporte 16 tours de calcul, notés T1 à T16, comme représenté sur les figures 3 et 4.

Le DES débute par une permutation initiale IP sur le message d'entrée M (figure 3). Le message d'entrée M est un mot f de 64 bits. Après permutation, on obtient un mot e de 64 bits, que l'on coupe en deux pour former les paramètres d'entrée LO et RO du premier tour (T1) . LO est un mot d de 32 bits contenant les 32 bits de poids forts du mot e RO est un mot h de 32 bits contenant les 32 bits de poids faibles du mot e.

La clé secrète K, qui est un mot q de 64 bits subit elle-même une permutation et une compression pour fournir un mot r de 56 bits.

Le premier tour comprend une opération EXP PEKM sur le paramètre RO, consistant en une expansion et une permutation, pour fournir en sortie un mot 1 de 48 bits.

Ce mot 1 est combiné à un paramètre K1, dans une opération de type OU EXCLUSIF notée XOR, pour fournir un mot b de 48 bits. Le paramètre K1 qui est un mot m de 48 bits est obtenu du mot r par un décalage d'une position (opération notée SHIFT sur les figures 3 et 4) suivi d'une permutation et d'une compression (opération notée COMP PERM).

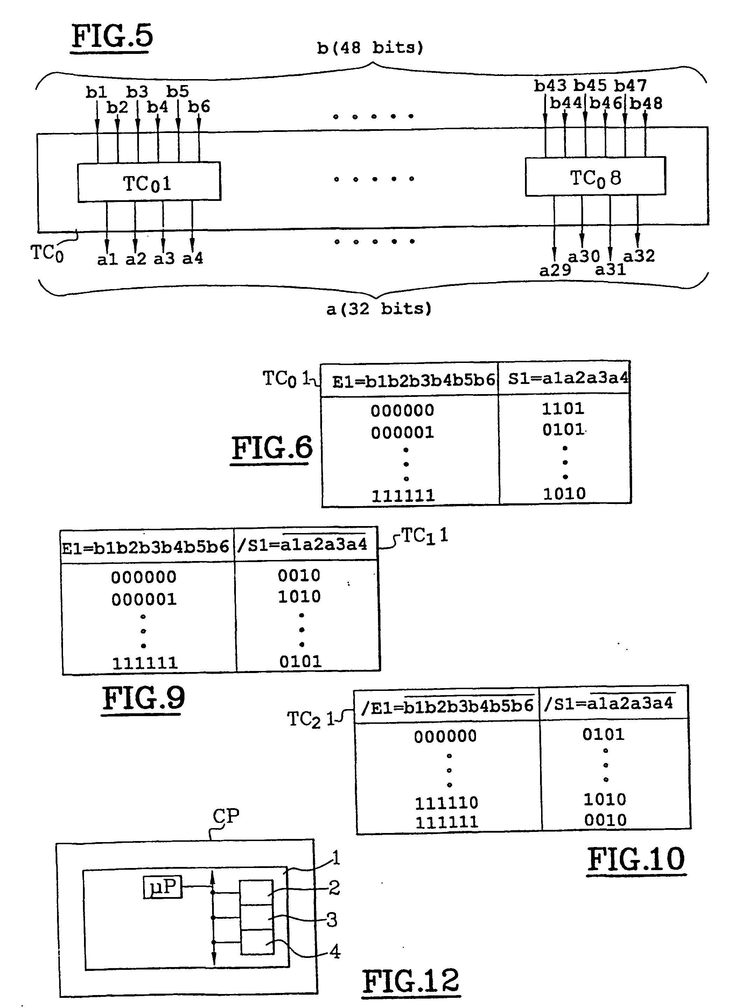

Le mot b est appliqué à une opération notée SBOX, en sortie de laquelle on obtient un mot a de 32 bits. Cette opération particulière sera expliquée plus en détail en relation avec les figures 5 et 6.

Le mot a subit une permutation P PERM, donnant en sortie le mot c de 32 bits.

Ce mot c est combiné au paramètre d'entrée LO du premier- tour T1, dans une opération logique de type OU EXCLUSIF, notée XOR, gui fournit en sortie le mot g de 32 bits.

Le mot h (=RO) du premier tour fournit le paramètre d'entrée L1 du tour suivant (T2) et le mot g du premier tour fournit le paramètre d'entrée RI du tour suivant. Le mot p du premier tour fournit l'entrée r du tour suivant.

Les autres tours T2 à T16 se déroulent de façon similaire, excepté en ce qui concerne l'opération de décalage SHIFT qui se fait sur une ou deux positions selon les tours considérés.

Chaque tour Ti reçoit ainsi en entrée les paramètres Li-1, Ri-1 et r et fournit en sortie les paramètres Li, Ri et r pour le tour suivant Ti+1.

En fin d'algorithme DES (figure 4), le message chiffré est calculé à partir des paramètres L16 et R16 fournis par le dernier tour T16.

Ce calcul du message chiffré C comprend en pratique les opérations suivantes :

- formation d'un mot e' de 64 bits en inversant la position des mots L16 et R16, puis en les concaténant:

  - application de la permutation $IP^{-1}$ inverse de celle de début de DES, pour obtenir le mot f' de 64 bits formant le message chiffré C.

L'opération SBOX est détaillée sur les figures 5 et 6. Elle comprend une table de constantes $TC_0$ pour fournir une donnée de sortie a en fonction d'une donnée d'entrée b.

En pratique, cette table de constantes $TC_0$ se présente sous la forme de huit tables de constantes élémentaires $TC_0 1$ à $TC_0 8$, chacune recevant en entrée seulement 6 bits du mot b, pour fournir en sortie seulement 4 bits du mot a.

Ainsi, la table de constantes élémentaires $TC_0 1$ représentée sur la figure 6 reçoit comme donnée d'entrée, les bits b1 à b6 du mot b et fournit comme donnée de sortie les bits a1 à a4 du mot a.

En pratique ces huit tables de constantes élémentaires sont mémorisées en mémoire programme du composant électronique.

Dans l'opération SBOX du premier tour T1, un bit particulier de la donnée a de sortie de la table de constantes $TC_0$ dépend de seulement 6 bits de la donnée b appliquée en entrée, c'est à dire de seulement 6 bits de la clé secrète K et du message d'entrée (M).

Dans l'opération SBOX du dernier tour T16, un bit particulier de la donnée a de sortie de la table de constantes $TC_0$ peut être recalculé à partir de seulement 6 bits de la clé secrète K et du message chiffré (C).

Or si on reprend le principe de l'attaque DPA, si on choisit comme bit cible un bit de la donnée de sortie a, il suffit de faire une hypothèse sur 6 bits de la clé K, pour prédire la valeur d'un bit cible pour un message d'entrée (M) ou de sortie (C) donné. En d'autres termes, pour le DES, il suffit de faire une hypothèse sur une sous-clé de 6 bits.

Dans une attaque DPA sur un tel algorithme pour un bit cible donné, on a donc à discriminer une hypothèse de sous-clé juste parmi 64 possibles.

Ainsi, en prenant seulement huit bits du mot a comme bits cibles, (un bit de sortie par table de constantes élémentaires $TC_0 1$ à $TC_0 8$), on peut découvrir jusqu'à 6x8=48 bits de la clé secrète, en faisant des attaques DPA sur chacun de ces bits cibles.

Dans le DES, on trouve donc des instructions critiques au sens des attaques DPA au début de l'algorithme et à la fin.

Au début de l'algorithme DES, les données qui peuvent être prédites à partir d'un message d'entrée M et d'une hypothèse de sous-clé, sont les données a et g calculées dans le premier tour (T1).

La donnée a du premier tour T1 (figure 3) est la donnée de sortie de l'opération SBOX du tour considéré. La donnée g est calculée à partir de la donnée a, par permutation (P PERM) et opération OU EXCLUSIF avec le paramètre d'entrée LO.

En fait, la donnée c du premier tour, est une donnée dérivée de la donnée a du premier tour. La donnée dérivée c correspond à une simple permutation de bits de la donnée a.

La donnée 1 du deuxième tour est une donnée dérivée de la donnée g du premier tour, car elle correspond à une permutation des bits du mot g, certains bits du mot g étant en outre dupliqués.

Connaissant a et g, on peut aussi connaître ces données dérivées.

Les instructions critiques du début de l'algorithme sont les instructions critiques qui manipulent soit la donnée que l'on peut prédire, comme la donnée a du premier tour, soit une donnée dérivée.

Les instructions critiques manipulant la donnée a du premier tour T1 ou la donnée dérivée c sont ainsi les instructions de fin de l'opération SBOX, de l'opération P PERM et de début de l'opération XOR du premier tour T1.

Les instructions critiques manipulant la donnée g ou des données dérivées sont toutes les instructions de fin d'opération XOR de fin du premier tour T1 jusqu'aux instructions de début d'opération SBOX du deuxième tour T2, et les instructions de début d'opération XOR de fin du troisième tour T3 (L2 = h (T2) = g (T1)) .

En fin d'algorithme DES, les données qui peuvent être prédites à partir d'un message chiffré C et d'une hypothèse de sous-clé, sont la donnée a du seizième tour T16 et la donnée L15 égale au mot h du quatorzième tour T14.

Les instructions critiques manipulant la donnée a du seizième tour ou des données dérivées sont les instructions du seizième tour de fin d'opération SBOX, de l'opération de permutation P PERM et de début d'opération XOR.

Pour la donnée L15, les instructions critiques manipulant cette donnée ou des données dérivées sont toutes les instructions depuis les instructions de fin d'opération XOR du quatorzième tour T14, jusqu'aux instructions de début d'opération SBOX du quinzième tour T15, et les instructions de début d'opération XOR de fin du seizième tour T16.

Le procédé de contre-mesure selon l'invention appliqué à cet algorithme DES consiste à avoir, pour chaque instruction critique, autant de chances que l'instruction critique manipule une donnée que son complément. Ainsi, quel que soit le bit cible sur lequel l'attaque DPA peut être faite, on a autant de chances que les instructions critiques qui manipulent ce bit, manipulent un «1» ou un «0».

En pratique, ceci doit être vrai pour chacun des bits cibles potentiels : en d'autres termes, l'attaquant ayant le choix entre plusieurs attaques possibles, c'est à dire entre plusieurs fonctions de sélection booléenne possibles pour effectuer son tri de courbes, pour une hypothèse de sous-clé donnée, la mise en oeuvre du procédé de contre-mesure selon l'invention doit s'attacher à ce que les données manipulées par chacune des instructions critiques, prennent aléatoirement, une fois sur deux, une valeur ou son complément. En ce qui concerne l'application du procédé de contre-mesure selon l'invention à l'algorithme DES, il faut donc appliquer la contre-mesure aux instructions critiques de début de DES et aux instructions critiques de fin de DES, pour être totalement protégé.

Dans le DES, toutes les données manipulées par des instructions critiques sont une donnée de sortie ou des données dérivées d'une donnée de sortie d'une opération SBOX.

En effet, en début de DES, les données qui peuvent être prédites sont les données a et g du premier tour T1. La donnée a est la donnée de sortie de l'opération SBOX du premier tour. La donnée g est calculée à partir de la donnée a, puisque g = P PERM (a) XOR LO. g est donc une donnée dérivée de la donnée de sortie a de l'opération SBOX du premier tour. Ainsi, toutes les données manipulées par les instructions critiques de début de DES découlent directement ou indirectement de la donnée de sortie a de l'opération SBOX du premier tour.

En ce qui concerne la fin de DES, les données qui peuvent être prédites sont la donnée a du seizième tour T16 et la donnée g du quatorzième tour T14, g étant égale à L15. La donnée a est la donnée de sortie de l'opération SBOX du seizième tour T16.

Quant à la donnée L15, elle se calcule, dans l'exécution normale de l'algorithme DES, à partir de la donnée de sortie a de l'opération SBOX du quatorzième tour T14:L15 = P PERM(a) XOR L14.

Si on rend imprédictibles les données de sortie a de ces opérations SBOX particulières, on rend aussi imprédictibles toutes les données dérivées : on rend donc imprédictibles toutes les données manipulées par les instructions critiques de l'algorithme DES.

L'opération SBOX correspond donc à des premiers moyens, qui consistent en une table de constantes $TC_0$, et qui sont utilisés dans chaque tour pour fournir une donnée de sortie E à partir d'une donnée d'entrée S.

Un mode de réalisation du procédé de contre-mesure appliqué à l'algorithme DES peut consister à utiliser au moins une autre table de constantes comme autres moyens pour rendre imprédictible la donnée de sortie a, en sorte que cette donnée de sortie et/ou des données dérivées manipulées par les instructions critiques soient toutes imprédictibles.

Dans l'exécution de l'algorithme, l'utilisation des différents moyens, c'est à dire, dans l'exemple, des différentes tables de constantes est gérée selon une loi statistique de probabilité un demi.

L'autre table de constantes ou les autres tables de constantes sont telles qu'à l'une et/ou l'autre des données d'entrée d et de sortie de la première table de constantes $TC_0$, elles font correspondent la donnée complémentée.

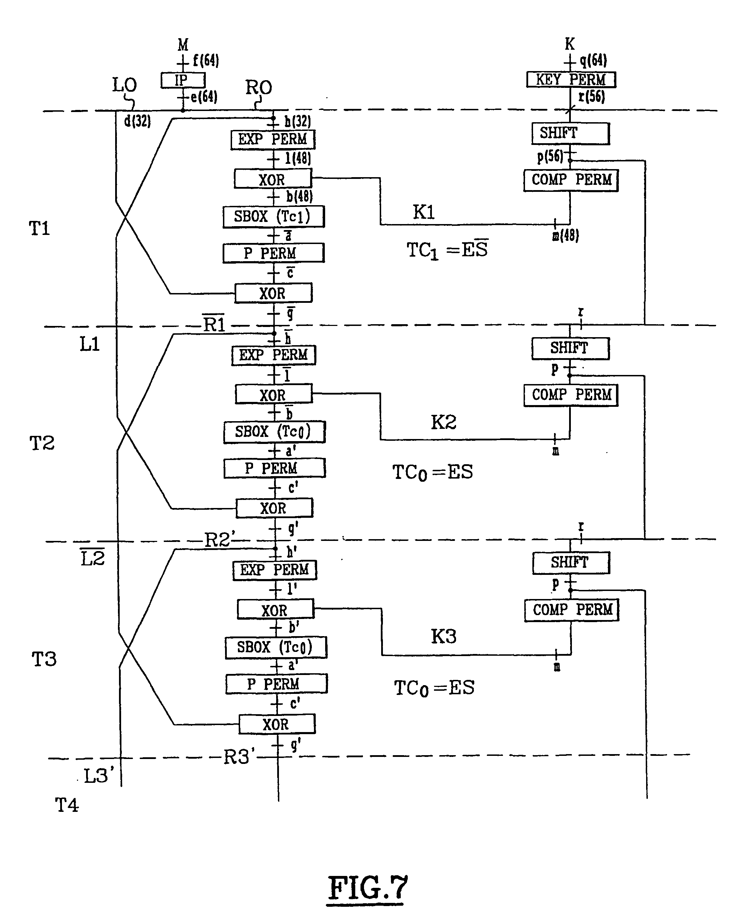

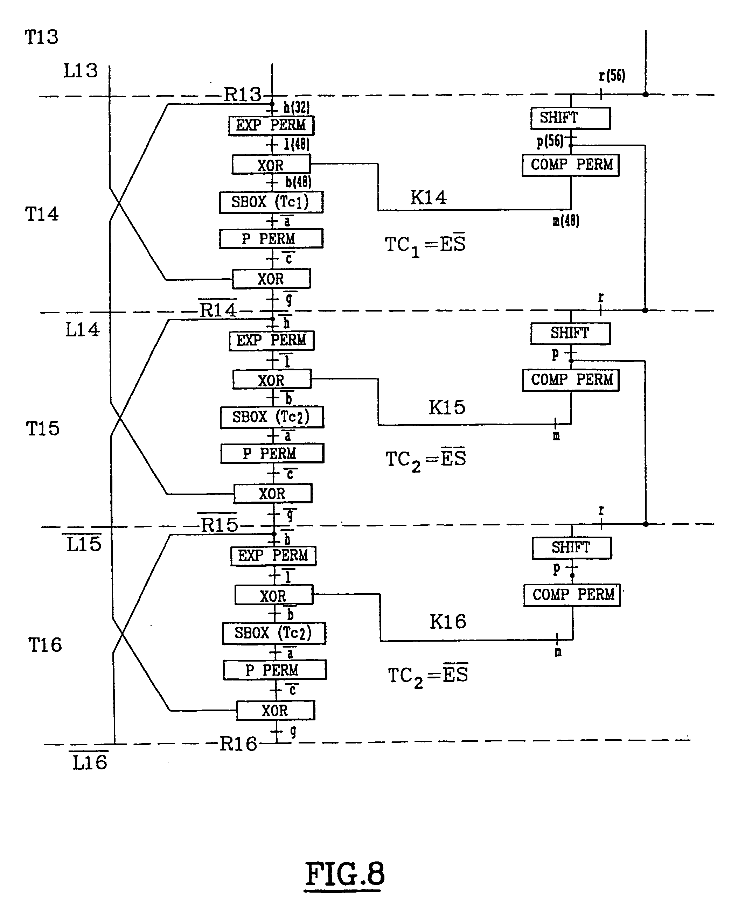

Les figures 7 et 8 représentent ainsi un mode d'application du procédé de contre-mesure de l'invention appliqué à l'algorithme DES.

La figure 7 représente le début de l'algorithme. Les opérations et données non modifiées par le procédé de contre-mesure selon l'invention portent les mêmes références que dans la figure 3 déjà décrite.

En début d'algorithme DES, on prévoit une deuxième table de constantes $TC_1$ dans l'opération SBOX du premier tour T1. Toutes les données affectées par cette deuxième table de constantes $TC_1$ sont affectées d'un signe ' ou d'un signe ⁻ sur ces figures. On voit que les instructions critiques de début de DES manipulent toutes des données affectées par le procédé de contre-mesure.

On remarquera que la première table de constantes étant en fait formée de huit premières tables de constantes, la deuxième table de constantes est également formée de huit deuxièmes tables de constantes.

Dans l'exemple de réalisation représenté, la première table de constantes $TC_0$ et la deuxième table de constantes $TC_1$ sont telles que pour une même donnée d'entrée E, la deuxième fournit en sortie le complément /S de la donnée de sortie S fournie par la première.

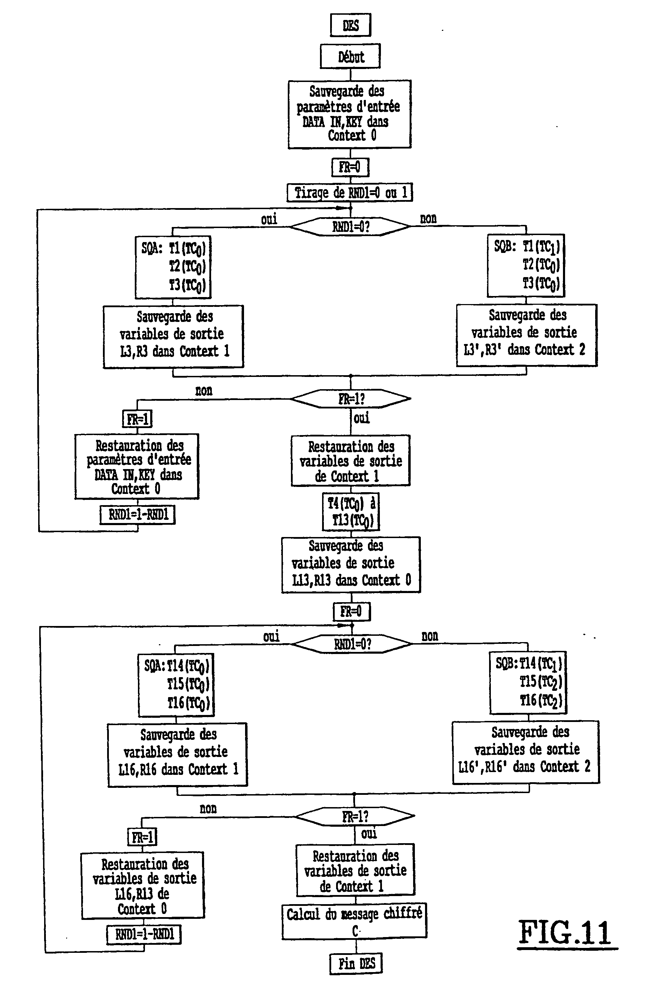

La figure 9 montre une telle deuxième table élémentaire $TC_1 1$ fournissant une sortie complémentée par rapport à la première table élémentaire $TC_0 1$ montrée sur la figure 6.

Avec une telle deuxième table de constantes $TC_1$, on obtient, en sortie de l'opération SBOX du premier tour T1, le complément /a de la donnée a obtenu avec la première table de constantes $TC_0$. De même, on obtient dans le premier tour T1 la donnée complémentée /g et dans le deuxième tour T2, les données complémentées /h, /L2, /1 et /b.

En utilisant la première table ou la deuxième table pour fournir la donnée de sortie selon une loi statistique de probabilité un demi, tous les bits de cible potentiels de début de DES manipulés par les instructions critiques ont autant de chances de prendre la valeur «1» que de prendre la valeur «0».

En fin d'algorithme DES, le mode de réalisation du procédé de contre-mesure selon l'invention nécessite l'utilisation de plusieurs tables de constantes différentes de la première, car il faut considérer à la fois la donnée de sortie a calculée au quatorzième tour T14, et la donnée de sortie a calculée au seizième tour T16 pour rendre imprédictibles toutes les données manipulées par les instructions critiques de cette fin de DES.

Un exemple de réalisation du procédé de contre-mesure appliqué à cette fin d'algorithme DES est représenté sur la figure 8.

Il prévoit l'utilisation de deux tables de constantes $TC_1$ et $TC_2$.

Dans l'opération SBOX du quatorzième tour T14, on utilise la deuxième table de constantes $TC_1$ déjà utilisée pour le début du DES.

Et on utilise une troisième table de constantes $TC_2$, dans les opérations SBOX des quinzième et seizième tours.

Cette troisième table de constantes $TC_2$ est telle qu'elle fournit le complément /S de la donnée de sortie S au complément /E de la donnée d'entrée E de la première table de constantes $TC_0$. Un exemple d'une troisième table de constantes élémentaires $TC_2 1$ correspondante, à partir de la première table de constantes élémentaires $TC_0$ est montré sur la figure 10.

En utilisant de telles tables de constantes, il apparaît sur la figure 8 que toutes les instructions critiques manipulent des données complémentées.

L'invention ne se limite pas à ces seuls exemples de tables de constantes $TC_1$ et $TC_2$. D'autres possibilités existent. Par exemple, pour le procédé de contre-mesure appliqué à la fin de DES, il est aussi possible de combiner l'utilisation de la table de constantes $TC_1$ avec une autre table de constantes définie par rapport à la première table de constantes $TC_0$ comme fournissant la donnée de sortie S au complément /E de la donnée d'entrée.

D'une manière générale, la fin de DES nécessite l'utilisation de différentes tables de constantes, en fonction des tours considérés, pour que toutes les données manipulées par les instructions critiques de cette fin de DES soient imprédictibles.

Le mode de réalisation décrit en relation avec les figures 7 et 8 a cependant un inconvénient : le procédé de contre-mesure appliqué en entrée de DES produit des résultats intermédiaires calculés L3' et R3' qui ne sont pas justes. Tous les résultats intermédiaires suivants ne sont donc pas justes non plus.

De même, en fin de DES, le procédé de contre-mesure appliqué en entrée de DES produit des résultats intermédiaires calculés L16' et R16' qui ne sont pas justes.

Dans tous les cas, le message chiffré est faux.

Dans ce mode de réalisation de l'invention, il faut donc prévoir de pouvoir reprendre à chaque fois la suite de l'algorithme avec les bons résultats intermédiaires, une fois les instructions critiques passées.

En pratique, comme on a vu que les instructions critiques de début de DES se trouvent dans les trois premiers tours, on va dédoubler ces trois premiers tours En d'autres termes, on prévoit d'exécuter deux séquences comprenant chacune les trois premiers tours T1, T2, T3 au moins. Une première séquence SEQA utilise la première table de constantes $TC_0$ dans chaque tour. L'autre séquence SEQB utilise la deuxième table de constantes $TC_1$ au moins dans le premier tour T1. Dans l'exemple représenté, on utilise la première table de constantes dans les deux tours suivants T2 et T3.

On a vu que dans le procédé de contre-mesure selon l'invention, l'utilisation des différents moyens, c'est à dire, dans l'exemple, l'utilisation des différentes tables de constantes, est gérée selon une loi statistique de probabilité un demi. Cette loi statistique de probabilité un demi est alors plus particulièrement appliquée à l'ordre d'utilisation de ces différents moyens, c'est à dire, dans l'exemple, à l'ordre d'exécution des deux séquences SEQA et SEQB.

De même, pour avoir les bons paramètres L16 et R16 en fin de DES pour élaborer le message chiffré C, on dédouble également les trois tours T14, T15 et T16 (figure 7) qui contiennent les instructions critiques de fin de DES. On va donc exécuter deux séquences gui comprennent au moins les trois derniers tours T14, T15, T16. Une première séquence SEQA' utilise dans chaque tour la première table de constantes $TC_0$. L'autre séquence SEQB' utilise les autres tables de constantes $TC_1$ et $TC_2$ Comme précédemment, la loi statistique de probabilité un demi est alors appliquée à l'ordre d'exécution de ces deux séquences SEQA' et SEQB'.

Les instructions critiques sont alors exécutées deux fois, une dans chaque séquence. Mais au moment de l'exécution de n'importe laquelle des instructions critiques de l'une ou l'autre des séquences, la probabilité de manipuler une donnée sera égale à la probabilité de manipuler son complément.

Le programme de calcul du DES mis en oeuvre dans le composant électronique doit donc être modifié pour inclure le procédé de contre-mesure selon l'invention. Un exemple d'organigramme d'exécution conforme à l'invention et mettant en oeuvre le procédé de contre-mesure en début et en fin de DES selon le mode de réalisation décrit en relation avec les figures 7 et 8 est représenté sur la figure 11. Dans cet exemple, les séquences SEQA et SEQB comprennent les trois premiers tours et les séquences SEQA' et SEQB' comprennent les trois derniers tours.

Le programme de calcul consiste alors principalement, au début du calcul, à sauvegarder les paramètres d'entrée notés DATAIN et KEY, qui correspondent en pratique aux paramètres LO, RO et r, dans une zone mémoire temporaire notée CONTEXTO.

Selon ce programme de calcul, on positionne ensuite un premier compteur de boucle FR à 0, et on tire aléatoirement une valeur RND1 égale à 0 ou à 1.

Si RND1 vaut 1, dans l'exemple, on effectue d'abord la séquence SEQB de T1, T2, T3, dans laquelle on utilise la deuxième table de constantes $TC_1$ au tour T1 et la première table $TC_0$ pour les tours T2 et T3. On sauvegarde les paramètres de sortie L3', R3' (qui ont des valeurs fausses) dans une zone mémoire temporaire notée CONTEXT2.

Si FR n'est pas égal à 1, on le met a 1, on restaure les paramètres d'entrée du CONTEXTO et on complémente la valeur de RND1. Dans l'exemple, on obtient RND1=0. On va alors exécuter l'autre séquence SEQA de T1, T2, T3 dans laquelle on utilise la première table de constantes dans les trois tours T1, T2 et T3.

On sauvegarde les paramètres de sortie (valeurs justes) dans une zone mémoire temporaire notée CONTEXT1.

Si FR est à 1, c'est que l'on a effectué les deux séquences. On restaure alors CONTEXT1 pour fournir les résultats intermédiaires L3, R3 ayant les valeurs justes, au tour suivant (T4).

Si RND1 vaut zéro, on commence par T1 $(TC_0)$, $T2(TC_0)$, T3 $(TC_0)$ et on finit par $T1(TC_1)$, T2 $(TC_0)$, $T3(TC_0)$.

Arrivé à la fin du tour T13, on sauvegarde les paramètres fournis par ce tour, L13, R13, dans la mémoire temporaire CONTEXTO, et on procède pour les tours restants T14, T15 et T16 de façon similaire aux premiers tours.

Dans tous les cas, il faut que le nombre d'instructions soit exactement le même quel que soit le chemin de calcul. C'est pour cela notamment que dans l'exemple d'application décrit, on prévoit de sauvegarder aussi les valeurs fausses (L3', R3' ou L16', R16') dans la zone mémoire temporaire CONTEXT2.

En effet si une différence quelconque existait entre les deux chemins possibles, il y aurait alors une possibilité d'attaque DPA fructueuse.

Le procédé de contre-mesure selon l'invention n'est pas limité à l'exemple particulier de réalisation décrit en référence à l'algorithme DES. Il s'applique à tout algorithme de cryptographie à clé secrète. De manière générale, pour toute mise en oeuvre d'un algorithme comprenant l'utilisation de premiers moyens pour fournir une donnée de sortie à partir d'une donnée d'entrée, la donnée de sortie et/ou des données dérivées étant manipulées par des instructions critiques, le procédé de contre-mesure selon l'invention comprend l'utilisation d'autres moyens, en sorte que la donnée de sortie et les données dérivées soient imprédictibles.

L'utilisation des différents moyens, c'est à dire des premiers moyens et des autres moyens, est gérée selon une loi statistique de probabilité un demi.

Les autres moyens peuvent comprendre plusieurs moyens différents. Ils sont tels qu'à l'une ou à l'autre des données d'entrée et de sortie des premiers moyens, ils font correspondre la donnée complémentée.

Dans l'exemple d'un mode d'application du procédé de contre-mesure au DES plus particulièrement décrit, les premiers moyens consistent en la première table de constantes $TC_0$. Les autres moyens consistent, en début de DES, dans la deuxième table de constantes $TC_1$. En fin de DES, ils consistent en deux tables de constantes différentes, $TC_1$ et $TC_2$ dans l'exemple.

Pour appliquer le procédé de contre-mesure selon l'invention à un algorithme de cryptographie à clé secrète donné, il faut donc d'abord déterminer toutes les données de cet algorithme qui peuvent être prédites et toutes les instructions critiques au sens de l'attaque DPA manipulant ces données ou des données dérivées. Il faut ensuite identifier dans l'algorithme des premiers moyens et des autres moyens au sens de l'invention, en sorte que toutes les données manipulées par les instructions critiques soient imprédictibles. Les premiers moyens sont, pour l'algorithme DES, la table de constantes $TC_0$. Les autres moyens sont dans l'exemple, d'autres tables de constantes. Ces moyens peuvent être des opérations différentes pour d'autres algorithmes. Pour un même algorithme, ces moyens peuvent consister en des opérations différentes selon les instructions critiques identifiées.

Le composant électronique 1 mettant en oeuvre un tel procédé de contre-mesure dans un algorithme de cryptographie à clé secrète comprend typiquement, comme représenté sur la figure 12, un microprocesseur µP, une mémoire programme 2 et une mémoire de travail. Pour pouvoir gérer l'utilisation des différents moyens selon l'invention, qui sont, dans l'exemple décrit, les différentes tables de constantes mémorisées en mémoire programme, des moyens 4 de génération d'une valeur aléatoire entre 0 et 1, sont prévus qui, si on se reporte à la figure 11, fourniront la valeur de RND1 à chaque exécution du DES. Un tel composant peut tout particulièrement être utilisé dans une carte à puce CP, pour améliorer leur inviolabilité.

**Revendications**

1. Procédé de contre-mesure contre des attaques par analyse différentielle de consommation en courant dans un composant électronique comprenant un microprocesseur, une mémoire programme et une mémoire de travail permettant la mise en oeuvre d'un algorithme cryptographique à clé secrète (K) du type DES comprenant seize tours de calcul (T1, ...,T16), chacun des tours comprenant de nombreuses et différentes étapes de calcul, la mise en oeuvre de l'algorithme comprenant l'utilisation de premiers moyens ($TC_0$) de traitement numérique pour fournir une donnée de sortie (S) à partir d'une donnée d'entrée (E), ladite donnée de sortie et/ou des données dérivées étant manipulées par des instructions dudit algorithme, qui sont critiques au sens des dites attaques, **caractérisé en ce que** le procédé de contre-mesure prévoit l'utilisation d'autres moyens ($TC_1$) de traitement numérique, fixés avec les premiers moyens en mémoire programme du dit composant, de façon alternative avec lesdits premiers moyens, lesdits autres moyens étant obtenus desdits premiers moyens par complémentation de la donnée d'entrée et/ou de la donnée de sortie, en sorte que la donnée de sortie et lesdites données dérivées soient imprédictibles et **en ce que** les premiers moyens ($TC_0$) et les autres moyens ($TC_1$) sont des tables de constantes et leur utilisation ($TC_0$, $TC_1$) est gérée par une loi statistique de probabilité un demi.

2. Procédé de contre-mesure selon la revendication 1, **caractérisé en ce qu'**il comprend l'exécution d'une première séquence (SEQA) et d'une deuxième séquence (SEQB) formées des trois premiers tours au moins (T1, T2, T3), l'ordre d'exécution des séquences étant fonction de la loi statistique de probabilité un demi, la première séquence (SEQA) utilisant les premiers moyens ($TC_0$) dans chaque tour, la deuxième séquence (SEQB) utilisant les autres moyens ($TC_1$) dans le premier tour (T1) au moins.

3. Procédé de contre-mesure selon la revendication 2, **caractérisé en ce que** la première et la deuxième séquences sont formées chacune des trois premiers tours (T1, T2, T3).

4. Procédé de contre-mesure selon la revendication 2 ou 3, **caractérisé en ce que** les autres moyens consistent en des deuxièmes moyens ($TC_1$) tels que pour une même donnée d'entrée (E), ils fournissent en sortie le complément (/S) de la donnée de sortie (S) des premiers moyens ($TC_0$).

5. Procédé de contre-mesure selon la revendication 1, la mise en oeuvre de l'algorithme comprenant seize tours de calcul (T11, ...,T16), **caractérisé en ce qu'**il comprend l'exécution d'une première séquence (SEQA') et d'une deuxième séquence (SEQB') formées chacune des trois derniers tours (T14, T15, T16) au moins, l'ordre d'exécution des séquences étant fonction de la loi statistique de probabilité un demi, la première séquence (SEQA') utilisant les premiers moyens ($TC_0$) dans chaque tour, la deuxième séquence (SEQB') utilisant l'autre moyen ($TC_1$) et un autre moyen ($TC_2$), tables de constantes.

6. Procédé de contre-mesure selon la revendication 5, **caractérisé en ce que** la première et la deuxième séquences sont formées chacune des trois derniers tours, et **en ce que** les autres moyens utilisés dans la deuxième séquence comprennent des deuxièmes moyens ($TC_1$) et des troisièmes moyens ($TC_2$).

7. Procédé de contre-mesure selon la revendication 5 ou 6, **caractérisé en ce que** les deuxièmes moyens ($TC_1$) sont tels que pour une même donnée d'entrée (E), ils fournissent en sortie le complément (/S) de la donnée de sortie (S) des premiers moyens ($TC_0$) et **en ce que** ces deuxièmes moyens sont utilisés dans la deuxième séquence (SEQB') pour le quatorzième tour (T14).

8. Procédé de contre-mesure selon la revendication 7, **caractérisé en ce que** les troisièmes moyens ($TC_2$) sont tels que pour le complément de la donnée d'entrée (E), ils fournissent en sortie le complément (/S) de la donnée de sortie (S) des premiers moyens ($TC_0$) et sont utilisés dans la deuxième séquence, pour le quinzième tour et le seizième tour (T15, T16).

9. Composant électronique comprenant un microprocesseur, une mémoire programme et une mémoire de travail permettant la mise en oeuvre d'un algorithme cryptographique à clé secrète (K) du type DES, des premiers moyens ($TC_0$) de traitement numérique étant prévus pour fournir une donnée de sortie (S) à partir d'une donnée d'entrée (E), ladite donnée de sortie et/ou des données dérivées de cette donnée de sortie étant manipulées par des instructions critiques dudit algorithme au sens d'attaques par analyse différentielle de consommation en courant, **caractérisé en ce qu'**il comprend des moyens de mise en oeuvre de toutes les étapes d'un procédé de contre-mesure contre lesdites attaques selon l'une quelconque des revendications 1 à 8 précédentes, comprenant d'autres moyens de ($TC_1$) de traitement numérique de façon alternative avec lesdits premiers moyens, lesdits autres moyens étant obtenus desdits premiers moyens par complémentation de la donnée d'entrée et/ou de la donnée de sortie, en sorte que la donnée de sortie et lesdites données dérivées soient imprédictibles et **en ce que** les premiers moyens ($TC_0$) et les autres moyens ($TC_1$) sont des tables de constantes et leur utilisation ($TC_0$, $TC_1$) est gérée par une loi statistique de probabilité un demi, les dits moyens de ($TC_1$) étant fixés avec les premiers moyens en mémoire programme du dit composant, et des moyens de génération d'une valeur aléatoire (RND1) à 0 ou à 1 pour gérer l'utilisation des dits premiers moyens et autres moyens ($TC_0$, $TC_1$).

10. Carte à puce comprenant un composant électronique selon la revendication 9 permettant la mise en oeuvre d'un algorithme cryptographique à clé secrète (K) du type DES.

**Patentansprüche**

1. Gegenmaßnahmenverfahren gegen Angriffe per Differentialanalyse durch Stromverbrauch in einer elektronischen Komponente mit einem Mikroprozessor, einem Programmspeicher und einem Arbeitsspeicher, wodurch die Umsetzung eines kryptographischen Algorithmus mit geheimem Schlüssel (K) vom Typ DES mit sechzehn Berechnungssätzen (T1, ..., T16) erlaubt wird, wobei jeder der Sätze zahlreiche und unterschiedliche Berechnungsstufen umfasst, wobei die Umsetzung des Algorithmus den Einsatz von ersten Mitteln ($TC_0$) zur digitalen Verarbeitung umfasst, um eine Ausgangsangabe (S) ausgehend von einer Eingangsangabe (E) zu liefern, wobei die genannte Ausgangsangabe und / oder die abgeleiteten Daten durch Anweisungen des genannten Algorithmus manipuliert werden, die im Sinne der genannten Angriffe kritisch sind, **dadurch gekennzeichnet, dass** das Gegenmaßnahmenverfahren den Einsatz weiterer, mit den ersten Mitteln im Programmspeicher der genannten Komponente auf alternative Weise mit den genannten ersten Mitteln befestigten Mittel ($TC_1$) zur digitalen Verarbeitung vorsieht, wobei die genannten weiteren Mittel aus den genannten ersten Mitteln durch Komplementierung der Eingangseingabe und / oder der Ausgangsangabe derart gewonnen werden, dass die Ausgangsangabe und die genannten abgeleiteten Mittel unvorhersagbar sind und dass die ersten Mittel ($TC_0$) und die weiteren Mittel ($TC_1$) Konstantentabellen sind und ihr Einsatz ($TC_0$, $TC_1$) durch ein statistisches Wahrscheinlichkeitsgesetz eines Halben verwaltet wird.

2. Gegenmaßnahmenverfahren gemäß Anspruch 1, **dadurch gekennzeichnet, dass** es die Ausführung einer ersten Sequenz (SEQA) und einer zweiten Sequenz (SEQB) umfasst, die aus wenigstens den drei ersten Sätzen (T1, T2, T3) gebildet werden, wobei die Ausführungsreihenfolge der Sequenzen von dem statistischen wahrscheinlichkeitsgesetz eines Halben abhängt, wobei die erste Sequenz (SEQA) die ersten Mittel ($TC_0$) in jedem Satz einsetzt, wobei die zweite Sequenz (SEQB) die anderen Mittel ($TC_1$) wenigstens im ersten Satz (T1) einsetzt.

3. Gegenmaßnahmenverfahren gemäß Anspruch 2, **dadurch gekennzeichnet, dass** die ersten und zweiten Sequenzen jeweils aus den drei ersten Sätzen (T1, T2, T3) gebildet werden.

4. Gegenmaßnahmenverfahren gemäß Anspruch 2 oder 3, **dadurch gekennzeichnet, dass** die anderen Mittel aus zweiten Mitteln ($TC_1$) bestehen, so dass sie für eine und dieselbe Eingangsangabe (E) am Ausgang den Zusatz (/S) der Ausgangsangabe (S) der ersten Mittel ($TC_0$) liefern.

5. Gegenmaßnahmenverfahren gemäß Anspruch 1, wobei die Umsetzung des Algorithmus sechzehn Berechnungssätze (T1, ..., T16) umfasst, **dadurch gekennzeichnet, dass** es die Ausführung einer ersten Sequenz (SEQA') und einer zweiten Sequenz (SEQB') umfasst, die jeweils wenigsten aus den drei letzten Sätze (T14, T15, T16) gebildet werden, wobei die Ausführungsreihenfolge der Sequenzen von dem statistischen Wahrscheinlichkeitsgesetz eines Halben abhängt, wobei die erste Sequenz (SEQA') die ersten Mittel ($TC_0$) in jedem Satz einsetzt, wobei die zweite Sequenz (SEQB') das andere Mittel ($TC_1$) und ein anderes Mittel ($TC_2$), Kon-

stantentabellen einsetzt.

6. Gegenmaßnahmenverfahren gemäß Anspruch 5, **dadurch gekennzeichnet, dass** die ersten und zweiten Sequenzen jeweils aus den drei letzten Sätzen gebildet werden und dass die anderen in der zweiten Sequenz eingesetzten Mittel die zweiten Mittel ($TC_1$) und die dritten Mittel ($TC_2$) umfassen.

7. Gegenmaßnahmenverfahren gemäß Anspruch 5 oder 6, **dadurch gekennzeichnet, dass** die zweiten Mittel ($TC_1$) derart sind, dass sie für eine und dieselbe Eingangsangabe (E) am Ausgang den Zusatz (/S) der Ausgangsangabe (S) der ersten Mittel ($TC_0$) liefern und dass diese zweiten Mittel in der zweiten Sequenz (SEQB') für den vierzehnten Satz (T14) eingesetzt werden.

8. Gegenmaßnahmenverfahren gemäß Anspruch 7, **dadurch gekennzeichnet, dass** die dritten Mittel ($TC_2$) derart sind, dass sie für den Zusatz der Ausgangsangabe (E) am Ausgang den Zusatz (/S) der Ausgangsangabe (S) der ersten Mittel ($TC_0$) liefern und in der zweiten Sequenz für den fünfzehnten Satz und den sechzehnten Satz (T15, T16) eingesetzt werden.

9. Elektronische Komponente mit einem Mikroprozessor, einem Programmspeicher und einem Arbeitsspeicher, wodurch die Umsetzung eines kryptographischen Algorithmus mit geheimem Schlüssel (K) vom Typ DES erlaubt wird, wobei die ersten Mittel ($TC_0$) zur digitalen Verarbeitung vorgesehen sind, um eine Ausgangsangabe (S) ausgehend von einer Eingangsangabe (E) zu liefern, wobei die genannte Ausgangsangabe und / oder von dieser Ausgangsangabe abgeleitete Angaben durch im Sinne von Angriffen per Differentialanalyse des Stromverbrauchs kritische Anweisungen des genannten Algorithmus manipuliert werden, **dadurch gekennzeichnet, dass** es Umsetzungsmittel aller Stufen eines Gegenmaßnahmenverfahrens gegen die genannten Angriffe gemäß Anspruch 1 bis 8 umfasst, und weitere Mittel ($TC_1$) zur digitalen Verarbeitung auf alternative Weise mit den genannten ersten Mitteln umfasst, wobei die genannten anderen Mittel aus den genannten ersten Mitteln durch Komplementierung der Eingangsangabe und / oder der Ausgangsangabe erhalten werden, so dass die Ausgangsangabe und die genannten abgeleiteten Angaben unvorhersagbar sind und dass die ersten Mittel ($TC_0$) und die anderen Mittel ($TC_1$) Konstantentabellen sind und ihr Einsatz ($TC_0$, $TC_1$) durch ein statistisches Wahrscheinlichkeitsgesetz eines Halben verwaltet wird, wobei die genannten Mittel ($TC_1$) mit den ersten Mitteln im Programmspeicher der genannten Komponente und die Erzeugungsmittel eines zufälligen Wertes (RND1) bei 0 oder bei 1 zur Verwaltung des Einsatzes der genannten ersten Mittel und anderen Mittel ($TC_0$, $TC_1$) befestigt werden.

10. Chipkarte mit einer elektronischen Komponente gemäß Anspruch 9, das die Umsetzung eines kryptographischen Algorithmus mit geheimem Schlüssel (K) vom Typ DES umfasst.

**Claims**

1. A countermeasure method against attacks by current consumption differential analysis in an electronic component comprising a microprocessor, a program memory and a working memory allowing the use of a secret cryptographic algorithm with a secret key (K) of the DES type comprising 16 calculation turns (T1, ..., T16), each of the turns comprising many and various calculation steps, the implementation of the algorithm comprising the use of first digital processing means ($TC_0$) to supply an output data item (S) from an input data item (E), the said output data item and/or the derived data being manipulated by instructions of the said algorithm, which are critical within the meaning of the said attacks, **characterised in that** the countermeasure method provides for the use of other digital processing means ($TC_1$), fixed with the first means in the program memory of the said component, alternating with the said first means, the said other means being obtained from the said first means by complementation of the input data item and/or of the output data item, so that the output data item and the said derived data are unpredictable and **in that** the first means ($TC_0$) and the other means ($TC_1$) are tables of constants and their use ($TC_0$, $TC_1$) is managed by a statistical law of probability one half.

2. A countermeasure method according to claim 1, **characterised in that** it comprises the execution of a first sequence (SEQA) and a second sequence (SEQB) formed by the first three turns at least (T1, T2, T3), the order of execution of the sequences being a function of the statistical law of probability one half, the first sequence (SEQA) using the first means ($TC_0$) in each turn, the second sequence (SEQB) using the other means ($TC_1$) in the first turn (T1) at least.

3. A countermeasure method according to claim 2, **characterised in that** the first and second sequences are each formed from the first three turns (T1, T2, T3).

4. A countermeasure method according to claim 2 or 3, **characterised in that** the other means consist of the second means ($TC_1$) so that, for the same input data item (E), they supply as an output the complement (/S) of the output data item (S) of the first means ($TC_0$).

5. A countermeasure method according to claim 1, the use of the algorithm comprising 16 calculation turns (T11, ..., T16), **characterised in that** it comprises the execution of a first sequence (SEQA') and a second sequence (SEQB') each formed from the last three turns (T14, T15, T16) at least, the order of execution of the sequences being a function of the statistical law of probability one half, the first sequence (SEQA') using the first means ($TC_0$) in each turn, the second sequence (SEQB') using the other means ($TC_1$), and another means ($TC_2$) tables of constants.

6. A countermeasure method according to claim 5, **characterised in that** the first and second sequences are each formed from the last three turns, and **in that** the other means used in the second sequence comprise second means ($TC_1$) and third means ($TC_2$).

7. A countermeasure method according to claim 5 or 6, **characterised in that** the second means ($TC_1$) are such that, for the same input data item (E), they supply as an output the complement (/S) of the output data item (F) of the first means ($TC_0$) and **in that** these second means are used in the second sequence (SEQB') for the fourteenth turn (T14).

8. A countermeasure method according to claim 7, **characterised in that** the third means ($TC_2$) are such that, for the complement of the input data item (E), they supply as an output the complement (/S) of the output data item (S) of the first means ($TC_0$) and are used in the second sequence, for the fifteenth turn and the sixteenth turn (T15, T16).

9. An electronic component comprising a microprocessor, a program memory and a working memory for using a cryptographic algorithm with secret key (K) of the DES type, first digital processing means ($TC_0$) being provided for supplying an output data item (S) from an input data item (E), the said output data item and/or data derived from this output data item being manipulated by critical instructions of the said algorithm in the sense of attacks by the differential analysis of current consumption, **characterised in that** it comprises means of implementing all the steps of a countermeasure method against the said attacks according to any one of the preceding claims 1 to 8 comprising other means ($TC_1$) for digital processing alternatively with the first means, the said other means being obtained from the first means by complementation of the input data item and/or the output data item, so that the output data item and the said derived data are unpredictable and **in that** the first means ($TC_0$) and the other means ($TC_1$) are tables of constants and the use ($TC_0$, $TC_1$) is managed by a statistical law of probability one half, the said means ($TC_1$) being fixed with the first means of the program memory of the said component, and means of generating a random value (RND1) at 0 or 1 in order to manage the use of the said first means and other means ($TC_0$, $TC_1$).

10. A chip card comprising an electronic component according to claim 9 for implementing a cryptographic algorithm with secret key (K) of the DES type.

EP 1 119 939 B1

## FIG.1

## FIG.2

DPA(t)

t

EP 1 119 939 B1

M

f(64)

IP

e(64)

LO          RO

d(32)                          h(32)

EXP PERM

l(48)

XOR

b(48)

SBOX (Tc₀)

a(32)

P PERM

c(32)

XOR

g(32)

K          q(64)

KEY PERM

r(56)

SHIFT

p(56)

COMP PERM

m(48)

K1

TC₀ = ES

T1

R1          h(32)

L1

EXP PERM

l

XOR

b

SBOX (Tc₀)

a

P PERM

c

XOR

g

T2

r

SHIFT

p

COMP PERM

m

K2

R2          h

L2

EXP PERM

l

XOR

b

SBOX (Tc₀)

a

P PERM

c

XOR

g

T3

r

SHIFT

p

COMP PERM

m

K3

R3

L3

T4

FIG.3

**FIG.4**

## FIG.5

b(48 bits)

b1 b3 b5   b43 b45 b47
b2 b4 b6   b44 b46 b48

TC$_0$1   . . . . .   TC$_0$8

. . . . .

TC$_0$

. . . . .

a1 a2 a3 a4   a29 a30 a31 a32

a(32 bits)

TC$_0$ 1

| E1=b1b2b3b4b5b6 | S1=a1a2a3a4 |
|---|---|
| 000000 | 1101 |
| 000001 | 0101 |
| ⋮ | ⋮ |
| 111111 | 1010 |

## FIG.6

## FIG.9

TC$_1$ 1

| E1=b1b2b3b4b5b6 | /S1=$\overline{a1a2a3a4}$ |
|---|---|
| 000000 | 0010 |
| 000001 | 1010 |
| ⋮ | ⋮ |
| 111111 | 0101 |

TC$_2$ 1

| /E1=$\overline{b1b2b3b4b5b6}$ | /S1=$\overline{a1a2a3a4}$ |
|---|---|
| 000000 | 0101 |
| ⋮ | ⋮ |
| 111110 | 1010 |
| 111111 | 0010 |

## FIG.10

CP

μP    1
      2
      3
      4

## FIG.12

M

f(64)

IP

e(64)

LO

RO

d(32)

b(32)

EXP PERM

l(48)

XOR

b(48)

SBOX (Tc1)

$\overline{a}$

P PERM

$\overline{c}$

XOR

$\overline{g}$

T1

K1

$TC_1 = E\overline{S}$

K

q(64)

KEY PERM

r(56)

SHIFT

p(56)

COMP PERM

m(48)

$\overline{R1}$

L1

$\overline{h}$

EXP PERM

$\overline{l}$

XOR

$\overline{b}$

SBOX (Tc0)

a'

P PERM

c'

XOR

g'

T2

K2

$TC_0 = ES$

r

SHIFT

p

COMP PERM

m

R2'

$\overline{L2}$

h'

EXP PERM

l'

XOR

b'

SBOX (Tc0)

a'

P PERM

c'

XOR

g'

T3

K3

$TC_0 = ES$

r

SHIFT

p

COMP PERM

m

R3'

L3'

T4

# FIG.7

T13

L13

R13 — h(32)

r(56)

EXP PERM

SHIFT

l(48)

p(56)

XOR

COMP PERM

b(48)

K14

T14

SBOX (Tc₁)

$\overline{a}$

$TC_1 = E\overline{S}$

P PERM

m(48)

$\overline{c}$

XOR

$\overline{g}$

$\overline{R14}$ — $\overline{h}$

r

L14

EXP PERM

SHIFT

$\overline{l}$

p

XOR

COMP PERM

$\overline{b}$

K15

T15

SBOX (Tc₂)

$\overline{a}$

$TC_2 = \overline{E}\overline{S}$

P PERM

m

$\overline{c}$

XOR

$\overline{g}$

$\overline{R15}$ — $\overline{h}$

r

$\overline{L15}$

EXP PERM

SHIFT

$\overline{l}$

p

XOR

COMP PERM

$\overline{b}$

K16

T16

SBOX (Tc₂)

$\overline{a}$

$TC_2 = \overline{E}\overline{S}$

P PERM

m

$\overline{c}$

XOR

g

R16

$\overline{L16}$

FIG.8

DES

Début

Sauvegarde des paramètres d'entrée DATA IN, KEY dans Context 0

FR=0

Tirage de RND1=0 ou 1

RND1=0?
— oui — / — non —

SQA: T1(TC$_0$)
T2(TC$_0$)
T3(TC$_0$)

SQB: T1(TC$_1$)
T2(TC$_0$)
T3(TC$_0$)

Sauvegarde des variables de sortie L3,R3 dans Context 1

Sauvegarde des variables de sortie L3',R3' dans Context 2

FR=1?
— non — / — oui —

FR=1

Restauration des paramètres d'entrée DATA IN, KEY dans Context 0

RND1=1-RND1

Restauration des variables de sortie de Context 1

T4(TC$_0$) à T13(TC$_0$)

Sauvegarde des variables de sortie L13,R13 dans Context 0

FR=0

RND1=0?
— oui — / — non —

SQA: T14(TC$_0$)
T15(TC$_0$)
T16(TC$_0$)

SQB: T14(TC$_1$)
T15(TC$_2$)
T16(TC$_2$)

Sauvegarde des variables de sortie L16,R16 dans Context 1

Sauvegarde des variables de sortie L16',R16' dans Context 2

FR=1?
— non — / — oui —

FR=1

Restauration des variables de sortie L16,R13 de Context 0

RND1=1-RND1

Restauration des variables de sortie de Context 1

Calcul du message chiffré C

Fin DES

FIG.11